# NEUE EUROPÄISCHE PATENTSCHRIFT

(11) **EP 1 874 697 B2**
(45) Veröffentlichungstag und Bekanntmachung des Hinweises auf die Entscheidung über den Einspruch: **26.10.2016**
(45) Hinweis auf die Patenterteilung: 18.11.2009
(21) Anmeldenummer: 06725410.2
(22) Anmeldetag: 29.03.2006
(51) Int. Cl.: C03B 5/26

(54) **VORRICHTUNG ZUM ÜBERFÜHREN VON GLASSCHMELZE AUF EIN FLOATBAD**
DEVICE FOR TRANSFERRING GLASS MELT TO A FLOAT BATH
DISPOSITIF POUR TRANSFERER DU VERRE EN FUSION SUR UN BAIN DE FLOTTAGE

(30) Priorität: 26.04.2005 DE 102005019646
(43) Veröffentlichungstag der Anmeldung: 09.01.2008
(73) Patentinhaber: Asahi Glass Company, Limited, Chiyoda-ku Tokyo 100-8405 (JP)
(72) Erfinder: NOWAK-BÖTTGER, Sonja, 65375 Oestrich-Winkel (DE)
(74) Vertreter: WSL Patentanwälte Partnerschaft mbB
(86) Internationale Anmeldenummer: PCT/EP2006/061154
(87) Internationale Veröffentlichungsnummer: WO 2006/114360

(56) Entgegenhaltungen:
- WO-A-03/074436
- DE-A1- 10 209 743
- DE-A1- 10 308 031
- US-A- 5 855 640
- KREIDL ET AL: 'Application of Mathematical in the Process Development of Glass Forming' GLASTECH.BER.GLASS.SCI.TECHNOL. Bd. 77C, 2004, Seiten 52 - 60

## Beschreibung

Die vorliegende Erfindung betrifft eine Vorrichtung zum Überführen von Glasschmelze von einem Aufbereitungsbereich zu einem Floatbad, mit einer Zuführung auf einem Niveau oberhalb des Niveaus des Floatbades und mit einer Übergangsrampe von der Zuführung zu dem Floatbad.

Entsprechende Vorrichtungen sind aus der WO 03/074436 unter anderem zur Herstellung von Fensterglas bekannt. Das Floatbad besteht aus erhitztem, flüssigem Zinn, welches eine deutlich höhere Dichte hat als eine Glasschmelze und auf welches die flüssige Glasschmelze von der Übergangsrampe herab aufgleitet und bei entsprechend geringer Viskosität der Glasschmelze eine dünne, gleichmäßige Schicht auf dem Floatbad bildet. Die Glasschmelze kühlt während des Fließens auf dem Floatbad kontinuierlich ab und wird an dem von der Übergangsrampe entfernten Ende in Form hinreichend verfestigter Glasscheiben abgezogen, die dann in einzelnen Abschnitten abgetrennt und weiter abgekühlt werden.

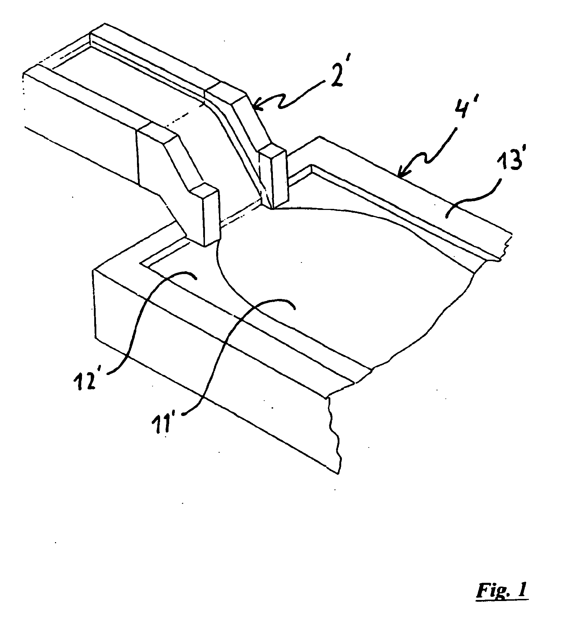

In jüngerer Zeit ist dieses Verfahren auch angewendet worden auf die Herstellung von LCD-Glasscheiben, das heißt Substratglas für Flüssigkristallanzeigen, wie sie für Flachbildschirme benötigt werden. Auch diese Substratgläser werden mit einem entsprechenden, sogenannten Mikro-Float-Glas-Prozess hergestellt, wobei Figur 1 schematisch ein Floatbad mit der davor liegenden Übergangsrampe und einer Glasschicht auf dem Floatbad gemäß dem Stand der Technik darstellt.

Substratgläser für LCD-Bildschirme (Flüssigkristallanzeigen) müssen im Vergleich zu Fensterglas deutlich höhere Anforderungen hinsichtlich der optischen Qualität erfüllen. Derartiges Substratglas ist im Allgemeinen noch deutlich dünner als Fensterglas und darf möglichst keine Verunreinigungen oder Schlieren aufweisen, welche die optische Qualität eines Flachbildschirms beeinträchtigen könnten.

Um diese Eigenschaften zu erzielen, weist das Substratglas für LCD-Flachbildschirme eine deutlich andere Zusammensetzung auf als Fensterglas. Insbesondere enthält das Glas für LCD-Flachbildschirme relativ hohe Anteile (über 10 %) an Boroxid und Aluminiumoxid und zudem noch Bariumoxid, dagegen deutlich weniger oder kein Natriumoxid und vor allem auch weniger Siliziumdioxid. Aufgrund dieser anderen Zusammensetzung muß die Temperatur von LCD-Substratglas zur Erzielung einer hinreichend geringen Viskosität kurz vor Erreichen des Floatbades bei 1350°C bis 1400 C° liegen, während die Temperatur für Fensterglas in diesem Bereich (der Vorrichtung) typischerweise nur bei etwa 1100°C bis 1150 °C liegt. Diese höhere Temperatur birgt auch eine höhere Gefahr zu Schlierenbildung in sich, da aufgrund von Kontakt mit kalten Flächen oder aufgrund von Wärmeabstrahlung in die kältere Umgebung sich unter Umständen parallele, kältere und wärmere Glasströme ausbilden, die insbesondere bei abnehmender Temperatur und zunehmender Viskosität des Glases zwangsläufig zu -Schlierenbildung führen. Darüber hinaus werden Schlieren verursacht durch Korrosionsmaterial des Schmelzbehälters, aufgrund der Glaszusammensetzung und schließlich auch aufgrund von Verdampfung gasförmiger Bestandteile, wie zum Beispiel Borsäure.

Es ist deshalb relativ schwierig, mit den herkömmlichen Floatglas-Vorrichtungen Substratglas für LCD-Flachbildschirme in ausreichend hoher Qualität herzustellen.

Gegenüber diesem Stand der Technik liegt der vorliegenden Erfindung die Aufgabe zu Grunde, eine Vorrichtung zu der eingangs genannten Art so auszugestalten, dass sie in der Lage ist, auch deutlich höher schmelzendes Borosilikatglas, wie es für LCD-Flachbildschirme Verwendung findet, thermisch und chemisch homogen und in hoher optischer Qualität herzustellen.

Diese Aufgabe wird dadurch gelöst, dass die Zuführung als Zuführrohr ausgebildet ist und die Vorrichtung zwischen Zuführrohr und Übergangsrampe ein Übergangsrohr aufweist, das sich in Fließrichtung trichterförmig aufweitet und welches eine durch Hindurchleiten von Strom direkt beheizbare Wand aufweist, wobei das Übergangsrohr (3) Stromflansche (5, 6) an seinen Stirnseite und an den gegenüerliegenden Seitenwänden des sich trichterförmig erweiterten Bereiches aufweist.

Die trichterförmige Erweiterung ermöglicht es, den Strom der flüssigen Glasschmelze schon vor dem Erreichen der Übergangsrampe entsprechend aufzuweiten, wie er auf die Übergangsrampe fließt, ohne daß auf der Übergangsrampe eine zusätzliche Ausbreitung des Glasstromes quer zur Hauptflussrichtung und damit verbundene Abkühlung einzelner Bereiche oder Stränge des Glasstromes erfolgt. Gleichzeitig ermöglicht es die Heizbarkeit der Wände des Übergangsrohrs, eine genügend hohe, gleichmäßige Temperatur der Glasschmelze aufrecht zu erhalten, so dass diese eine entsprechend geringe Viskosität hat und zu einer gleichmäßig dünnen Schicht auf dem Floatbad auseinander fließt.

Zweckmäßigerweise beschränkt sich die Aufweitung des Übergangsrohrs im wesentlichen auf die horizontale Richtung, das heißt in vertikaler Richtung erfolgt keine Aufweitung gegenüber dem Zuführrohr, sondern womöglich sogar eine Verjüngung, wohingegen in horizontaler Richtung eine deutliche Aufweitung erfolgt. Dies wiederum hat zur Folge, dass das Übergangsrohr in seinem Anschlussbereich an das Zuführrohr einen entsprechenden kreisförmigen Querschnitt hat, der sich im weiteren Verlauf des Übergangsrohrs in einen elliptischen, wahlweise auch einen rechteckigen, Querschnitt umwandelt, wobei die große Achse der betreffenden Ellipse bzw. die längere Seite des Rechtecks in horizontaler Richtung verläuft. Es versteht sich, daß hier nicht notwendigerweise elliptische oder rechteckige Querschnitte in einem strengen, geometrischen Sinn gemeint sind, sondern beliebige Übergangsformen zwischen diesen beiden Grundformen als Austrittsquerschnitt möglich sind,
wobei selbst ein kreisrunder Austrittsquerschnitt des Übergangsrohres möglich, wenn auch nicht bevorzugt wäre.

Dieses Übergangsrohr besteht vorzugsweise aus Platin oder einer Platinlegierung oder, falls ein anderes, thermisch beständiges Material, wie zum Beispiel Keramik oder Molybdän, verwendet wird, aus einer entsprechenden Beschichtung mindestens der Innenseite eines solchen Rohres.

Erfindungsgemäß sind außerdem Stromanschlüsse bzw. -flansche sowohl an der Stirnseite des Übergangsrohres vorgesehen, welche an das Zuführrohr anschließt, als auch an der entgegengesetzten Stirnseite, wo der Querschnitt des Übergangsrohrs mindestens in einer Richtung, vorzugsweise in horizontaler, erweitert ist.

Außerdem sind zusätzlich an gegenüberliegenden Wänden der trichterförmigen Erweiterung des Übergangsrohrs weitere Anschlussflansche für Stromquellen vorgesehen sind, wobei der Strom beispielsweise zwischen einem stirnseitigen Flansch an der Schnittstelle zum Zuführrohr und einem oder zwei der seitlichen Anschlussflansche durch die Wand des Übergangsrohrs und gegebenenfalls auch durch die Glasschmelze, soweit diese leitfähig ist, fließen kann.
Zusätzlich sind auch an der anderen Stirnseite auf gegenüberliegenden Seiten jeweils Anschlussflansche für eine Stromquelle vorgesehen, so dass der Strom zwischen diesen an gegenüberliegenden Seiten vorgesehenen Flanschen durch den vorderen, aufgeweiteten Abschnitt der Wand des Übergangsrohrs schließt. Dies führt insgesamt zu einer relativ gleichmäßigen Erhitzung des Übergangsrohrs aufgrund von direktem Stromdurchfluss, so dass auch im Bereich des Übergangsrohrs die Temperatur der Glasschmelze aufrechterhalten bzw. kontrolliert werden kann.

Zweckmäßigerweise sind die zugehörigen Stromquellen regelbar, was eine Regelung der Wärmezufuhr entsprechend den Temperaturen der Glasschmelze und entsprechend dem jeweiligen Durchsatz erlaubt

Als Alternative zu dem Material Platin oder einer Platinlegierung, insbesondere aus Rhodium-Platin, kommt noch die Verwendung einer elektrisch leitfähigen Keramik als Wandmaterial für das Übergangsrohr in Betracht.

Bevorzugt ist eine Ausführungsform der Erfindung, bei welcher am Ende des Übergangsrohrs, das heißt an dem trichterförmig erweiterten Ende, ein Schieber vorgesehen ist, der den Aüsströmquerschnitt des Übergangsrohrs radikal von oben her begrenzt. Aufgrund der in der bevorzugten Ausführungsform ohnehin schon elliptischen Verformung des Übergangsrohrs hat die austretende Glasschmelze ohnehin bereits ein relativ breites, flaches Profil, welches durch den von oben den elliptischen Querschnitt weiter begrenzenden Schieber noch flacher und auch gleichmäßiger wird.

Auch der Schieber ist zweckmäßiger Weise mit Platin oder mit einer Platinlegierung verkleidet und weist elektrische Anschlussflansche auf, die es ermöglichen, diesen Schieber bzw. dessen Oberfläche seinerseits zu heizen, damit der mit der Schmelze in Kontakt tretende untere Abschnitt des Schiebers nicht eine Wärmesenke für die Glasschmelze bildet.

Des weiteren ist in der bevorzugten Ausführungsform der Erfindung vorgesehen, dass auch die an das Übergangsrohr anschließende Übergangsrampe ein mit Ausnahme der stirnseitigen Zufuhr- und Abflussöffnungen allseitig geschlossener Kanal ist. Die Übergangsrampe weist im allgemeinen eine geneigte Übergangsfläche auf, auf welcher die Glasschmelze von dem Niveau des Übergangsrohrs auf das niedrigere Niveau des Floatbades absinkt. Dies führt dazu, dass allein aufgrund der Schwerkraft kontinuierlich Glasschmelze nachgeführt wird, was den Abzug von Flachglasscheiben am anderen, hinreichend abgekühlten Ende ausgleicht.

Dabei ist die Stirnseite des Ausflusskanals nach Möglichkeit auch in ihrem oberen Bereich geschlossen, was dazu führt, dass nur wenig oder keine Borsäure aus dem Borsilikatglas verdampft und somit die chemische Zusammensetzung des Glases erhalten bleibt, die für eine hohe Qualität des Glases erforderlich ist.

In einer weiteren, bevorzugten Ausführungsform sind auf den oberen Flächen der Übergangsrampe zusätzliche Stromzufuhrflansche vorgesehen. Zusätzliche ist die obere Abdeckung der Rampe in diesem Bereich mit diesen Flanschen verbunden, wobei die Abdeckung so mit Platin oder einer Platinlegierung beschichtet ist, daß durch den Stromfluß zwischen diesen Flanschen vor allem die der Glasschmelze hinter dem Schieber zugewandte Seite der Abdeckung durch den hindurchfließenden Strom erhitzt wird. Dies bewirkt, daß die Glasschmelze nach dem Hindurchtritt unter dem Schieber nochmals oberflächlich eine Zusatzheizung erfährt und dadurch an der Oberfläche besonders dünnflüssig wird. Dies wiederum bewirkt, daß etwaige, riefenförmige Oberflächenstrukturen, die durch den Kontakt des Schiebers mit der darunter hindurch tretenden Glasschmelze entstehen könnten, ineinander fließen, so daß im Ergebnis wieder eine vollständig glatte, homogene Oberfläche der Schmelze entsteht.

Zweckmäßiger Weise sind auch die Wände, sowie gegebenenfalls die obere Abdeckung und der Boden der Übergangsrampe elektrisch beheizbar, und zwar vorzugsweise durch direkten Stromdurchfluss, so dass die Wände, Decke und Boden des Übergangskanals vorzugsweise durch Platin oder durch eine Platinlegierung ausgekleidet sein sollten. Platin und Platinlegierungen haben den Vorteil, dass sie auch bei den hohen Temperaturen der Glasschmelze praktisch nicht mit dem Glasmaterial reagieren und damit die chemische Zusammensetzung des Glases nicht beeinträchtigen.

Wegen der erfindungsgemäßen Maßnahmen ist es möglich, den Strom der Glasschmelze bei seinem Übergang von der Übergangsrampe auf das Floatbad bereits in einen relativ breiten Strom von einer gleichmäßigen, geringen Höhe bzw. Schichtdicke austreten zu lassen, so dass die Glasschmelze sich sehr leicht gleichmäßig auf dem Floatbad verteilt. Auch zuvor schon wird der Strom der Glasschmelze in dem Übergangsrohr aufgeweitet und fließt somit in einem breiten, gleichmäßigen Strom ohne nennenswerten Temperaturgradienten auf die Übergangsrampe und weiter auf dieser herab. Da durch die erfindungsgemäßen Maßnahmen die Temperatur der Glasschmelze weitgehend konstant gehalten werden kann, gleichzeitig aber die Glasschmelze von der Umgebungsluft abgeschottet ist, kommt es praktisch kaum zu einer Verdampfung einzelner Bestandteile, insbesondere von Borsäure, und das Glas bleibt sehr homogen und erreicht damit eine hohe optische Qualität.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen Übergangsbereich zu einem Floatbad nach dem Stand der Technik,
- Figur 2: einen Übergang von einem Zuführrohr zu einem Floatbad gemäß der vorliegenden Erfindung, und
- Figur 3: eine Draufsicht auf das sich trichterförmig erweiternde Übergangsrohr gemäß der vorliegenden Erfindung.

Man erkennt in Figur 1 ein Floatbad 4', welches aus einem Bad aus flüssigem Zinn 12' besteht, das in einer Wanne 13' aus einem hitzebeständigen, feuerfesten Steinmaterial aufgenommen ist. Die Glasschmelze 11' fließt von einer Übergangsrampe 2' auf die Oberfläche des flüssigen Zinnbades 12' und verteilt sich dort gleichmäßig in Form einer dünnen, flachen Schicht, die an dem in Figur 1 nicht mehr sichtbaren Ende der relativ langen Wanne 13' nach genügender Abkühlung und Erstarrung kontinuierlich abgezogen wird.

Ein nicht dargestellter Schieber am oben links erkennbaren Zufluss der Rampe 2' regelt die Menge an nachströmender Glasschmelze, wodurch in Verbindung mit dem kontinuierlichen Abzug die Schichtdicke der Glasschmelze 11' geregelt wird.

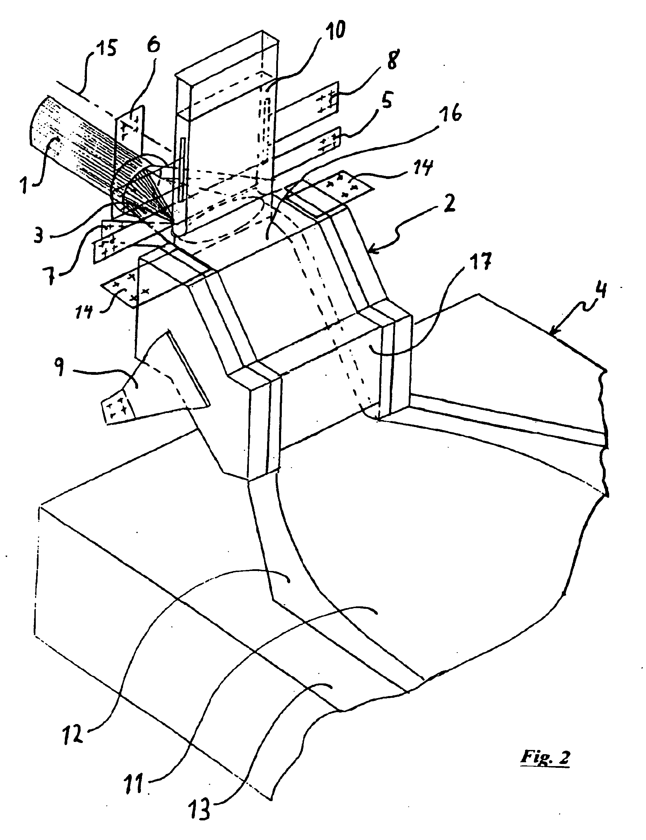

In Figur 2 erkennt man einen entsprechenden Übergangsbereich der gemäß der vorliegenden Erfindung ausgestattet ist. Die einzelnen Komponenten sind, soweit sie in den Komponenten in Figur 1 entsprechen, mit denselben Bezugszeichen, jedoch ohne Strich wiedergegeben. Man erkennt zunächst das Floatbad 4, welches völlig analog zu dem Floatbad 4' in Figur 1 ausgebildet ist. Auch dieses Floatbad 4 besteht im wesentlichen aus flüssigem Zinn 12 in einer Wanne 13, wobei eine Glasschmelze 11 von einer Übergangsrampe 2 auf das Bad 12 aus flüssigem Zinn auffließt. Ein wesentlicher Unterschied zu der Ausführungsform nach Figur 1 besteht jedoch in der konkreten Ausgestaltung der Übergangsrampe 2 und den Einrichtungen für die Zuführung der Glasschmelze zu der Rampe 2. Das erfindungsgemäße Floatbad ist in erster Linie für LCD-Substratglas vorgesehen, welches in relativ dünnen Schichten von weniger als 1 mm mit hoher optischer Qualität hergestellt werden muss, wobei die Glasschmelze, wenn sie auf das Floatbad 4 gelangt, eine um ca. 250°C höhere Temperatur hat als eine typische Glasschmelze für Fensterglas.

Man erkennt oben links in Figur 2 ein Zuführrohr 1, welches die darin enthaltene Glasschmelze von einem davor liegenden Aufbereitungsbereich, der hier nicht näher erläutert wird, dem Floatbad 4, bzw. genauer gesagt dem Übergangsbereich zu dem Floatbad 4 zuführt. Das Rohr 1 befindet sich vorzugsweise vollständig unterhalb des Niveaus der Glasschmelze in dem davor liegenden Aufbereitungsbereich, welches hier schematisch als eine Linie 15 wiedergegeben ist. Dies bedeutet, dass das Rohr 1 ohne Lufteinschluss vollständig mit der Glasschmelze gefüllt ist. Das Rohr 1 mündet in ein Übergangsrohr 3, welches an seinem Einlass einen dem Rohr 1 entsprechenden, kreisförmigen Querschnitt hat, sich aber zu der Übergangsrampe 2 hin trichterförmig erweitert, wobei sein Durchmesser vor allem in horizontaler Richtung zunimmt, während der Durchmesser des Rohres in vertikaler Richtung entweder im wesentlichen gleich bleibt oder aber abnimmt. Die gesamte Querschnittsfläche des Übergangsrohres 3 soll jedoch vorzugsweise von seiner Eintrittsöffnung zu seiner Austrittsöffnung hin nicht wesentlich reduziert werden und kann sich ohne weiteres auch erweitern, wobei es auf den Betrag des Austrittsquerschnitts nicht wesentlich ankommt solange genügend Glasschmelze hindurchströmen kann, um eine gewünschte Produktionsgeschwindigkeit aufrecht erhalten zu können. Auch dieses Übergangsrohr 3 befindet sich, ebenso wie die gesamte nachfolgende Übergangsrampe 2, unter dem Niveau 15 der Glasschmelze im Aufbereitungsbereich.

Am Ausgang des Übergangsrohrs 3 bzw. an dessen Schnittstelle zu der Übergangsrampe 2 befindet sich ein Schieber 10, welcher je nach Einstellung den Austrittsquerschnitt des Übergangsrohrs 3 von oben her mehr oder weniger begrenzt. Von dort gelangt die Glasschmelze auf die Übergangsrampe 2, die als ein allseitig geschlossener Kanal ausgeführt ist, der nur die offene Eintrittsöffnung im Bereich des Schiebers 10 und eine Auslassöffnung bzw. einen Auslassspalt am Übergang zum Floatbad 4 hat. Demzufolge wird die Glasschmelze, wenn sie auf der Übergangsrampe 2 herab auf das Floatbad 4 fließt, ebenfalls von der Umgebung abgeschirmt. Zuführrohr 1 und Übergangsrohr 3 sind bis zum Schieber 10 vollständig mit Glasschmelze ausgefüllt.

Wahlweise kann auch die stirnseitige Abdeckung 17 der Übergangs rampe 2 im Ausgangsbereich der Übergangsrampe als ein vertikal verstellbarer Schieber ausgebildet sein, der den Austrittsquerschnitt der Übergangsrampe 2 einstellt und dadurch die Menge der auf das Floatbad 4 nachströ menden Glasschmelze 11 regeln kann. Auf diese Weise könnte man gewährleisten, daß auch der die Übergangsrampe 2 bildende, geschlossene Kanal vollständig mit Glasschmelze ausgefüllt ist, die dadurch bis zum Floatbad keinerlei Kontakt mit Um gebungsluft hat.

Eine der Besonderheiten der vorliegenden Erfindung liegt also in der vollständig geschlossenen Ausführung des Übergangsrohrs 3 und der Übergangsrampe 2 mit dem darauf bzw. dazwischen angeordneten Schieber 10, die einen Kontakt der heißen Schmelze mit Umgebungsluft verhindern und dadurch insbesondere chemische Veränderungen und ein Ausgasen der heißen Glasschmelzen vermeiden. Eine zweite Besonderheit liegt in der Heizbarkeit der Elemente im Übergangsbereich, die bei entsprechend angepasster Heizleistung für eine homogene Temperaturverteilung in der Glasschmelze sorgen. Sowohl das Übergangsrohr 3 als auch die Übergangsrampe 2 und auch der Schieber 10 sind heizbar.

Zu diesem Zweck ist das Übergangsrohr 3 aus einem elektrisch leitfähigen Material hergestellt und weist an seiner dem Zuführrohr 1 zugewandten Stirnseite einen Stromflansch 6 auf und hat an seiner dem Übergangskanal 2 zugewandten Ausgangsseite einen Stromflansch 5. Dazwischen sind weitere Stromflansche 7 an der Seitenwand des Übergangsrohrs 3 befestigt. Durch Hindurchleiten hoher Ströme durch die Wände des Übergangsrohres 3 kann dessen Temperatur in weiten Bereichen geregelt werden, so dass auch die in dem Rohr befindliche Schmelze auf im wesentlichen konstanter Temperatur gehalten wird und keinen starken Temperaturgradienten durch Berührung mit ungeheizten Rohrwandungen ausgesetzt ist. Ebenso ist auch der Schieber aus einem elektrisch leitfähigen Material hergestellt bzw. weist eine elektrisch leitfähige Beschichtung auf, die ihrerseits mit Stromflanschen 8 versehen ist, um durch den Schieber 10 bzw. dessen Beschichtung entsprechende Heizströme fließen lassen zu können, damit auch der Schieber keine Wärmesenke für die mit dem Schieber in Berührung kommende Schmelze darstellt.

Das Gleiche gilt schließlich auch für den Übergangskanal 2, der in der bevorzugten Ausführungsform der Erfindung ebenfalls aus elektrisch leitfähigem Material besteht oder aber mit elektrisch leitfähigem Material, welches gleichzeitig selbstverständlich auch hitzebeständig sein und gegenüber der Glasschmelze chemisch inert sein muss, beschichtet ist. Stromflansche 9 und 14 sorgen hier für eine entsprechende Stromzufuhr, wobei die Stromflansche 14 für die Stromzufuhr durch die obere Abdeckung 16 zum Zwecke der bereits erwähnten oberflächlichen Erhitzung der Schmelze nach dem Hindurchtritt unter dem Schieber 10 vorgesehen sind. Auf diese Weise erreicht man, dass die Glasschmelze während ihres gesamten Weges von dem Zuführrohr 1 bis unmittelbar zum Auffließen auf das Floatbad 4 bei einer konstanten Temperatur gehalten wird und keinen Temperaturgradienten ausgesetzt sind, die ansonsten leicht zur Schlierenbildung führen könnten. Die Temperaturabsenkung erfolgt vielmehr erst dann, wenn die Glasschmelze sich in Form einer sehr dünnen Schicht gleichmäßig auf dem flüssigen Zinn 12 des Floatbades 4 verteilt hat. Auch die stirnseitige Abschlußplatte 17 der Übergangsrampe kann, vor allem an ihrer unteren, der Schmelze zugewandten Seite von Strom durchflossen sein, um die Oberfläche der Schmelze nochmals beim Übergang auf das Floatbad besonders dünnflüssig und damit glatt und homogen zu machen.

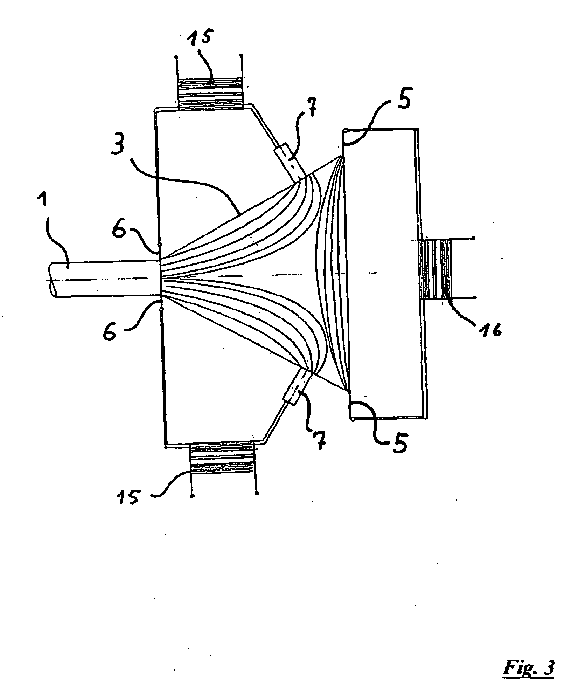

In Figur 3 erkennt man nochmals eine Draufsicht auf das Übergangsrohr 3, das an das Zuführrohr 1 anschließt, wobei allerdings auf der rechten Seite der Schieber und der Übergangskanal 2 in Figur 3 nicht mehr dargestellt sind. Dargestellt sind jedoch die einzelnen Flansche 5, 6 und 7, mit welchen das Übergangsrohr am Eingang, am Ausgang und in dem dazwischen liegenden Bereich ausgestattet ist. Weiterhin sind dargestellt die entsprechenden Hochstromquellen 15,16, die den Stromfluss in der Wand des Übergangsrohrs 3 bewirken. Darüber hinaus sind in Figur 3 noch schematisch die elektrischen Feldlinien bzw. Strombahnen eingezeichnet, die sich in der Wand des Rohres 3 ausbilden, wenn zwischen den Flanschen 5, 6 und 7 in der dargestellten Weise die Stromquellen 15 und 16 geschaltet werden.

Wie man sieht, wird die Wand des sich trichterförmig erweiternden Übergangsrohres 3 relativ gleichmäßig von Strom durchflossen, wobei es selbstverständlich möglich wäre, weitere Stromflansche in der Weise an dem Übergangsrohr 3 anzuordnen, dass der Stromfluss die Wand des Zuführrohres 3 noch gleichmäßiger durchsetzt.

In der bevorzugten Ausführungsform der Erfindung besteht das Übergangsrohr 3 aus Platin oder einer Platinlegierung, insbesondere einer Legierung aus Platin mit bis zu 20 % Rhodium. Der Schieber 10 und die Übergangsrampe bzw. der Übergangskanal 2 können beispielsweise aus einem keramischen Material hergestellt und mit Platin oder einer Platinlegierung beschichtet sein, welche elektrisch leitfähig sind und dadurch eine direkte Beheizung durch hindurchfließenden Strom ermöglichen.

Andere Varianten umfassen beispielsweise eine Grundstruktur aus hohlen Wänden, beispielsweise aus Molybdän, welches ebenfalls hochtemperaturbeständig ist, und welches zumindest in seinem mit der Glasschmelze in Berührung kommenden Bereich mit Platin oder einer Platinlegierung beschichtet ist, da Platin und entsprechende Legierungen sich gegenüber der heißen Glasschmelze im wesentlichen chemisch inert verhalten.

Mit der erfindungsgemäßen Vorrichtung werden im wesentlichen zwei Ziele erreicht, nämlich zum einen die vollständige Abschottung der sehr heißen Glasschmelze gegenüber der Umgebung bis zum Auffließen auf das Floatbad und die Vermeidung jeglicher Temperaturgradienten durch Beheizung aller Rohrwände, Kanäle und sonstigen Einrichtungen, mit welchen die Glasschmelze auf ihrem Weg zum Floatbad 4 in Berührung kommt. Beides zusammen führt zu einer sehr hohen optischen

Qualität des mit dieser Vorrichtung im Floatbadverfahren hergestellten Glases, welches bei entsprechender Zusammensetzung als LCD-Substratglas Verwendung finden kann.

Da die hohe Temperatur bis unmittelbar zum Auftreffen auf dem Floatbad aufrecht erhalten werden kann, besitzt die Glasschmelze eine entsprechend geringe Viskosität und breitet sich daher sehr gleichmäßig auch in dünnen Schichten schlierenfrei auf dem Floatbad aus.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Vorrichtung zum Überführen von Glasschmelze von einem Aufbereitungsbereich zu einem Floatbad (4), mit einer Zuführung auf einem Niveau oberhalb des Niveaus des Floatbades (4) und mit einer Übergangsrampe (2) von dem Niveau der Zuführung auf das Niveau des Floatbades (4), **dadurch gekennzeichnet, dass** die Zuführung als Zuführrohr ausgebildet ist und die dass zwischen Zuführrohr (1) und Übergangsrampe (2) ein Übergangsrohr (3) vorgesehen ist, das sich mit der Fließrichtung trichterförmig erweitert und das durch Hindurchleiten von Strom direkt beheizbar ist, wobei das Übergangsrohr (3) Stromflansche (5, 6) an seinen Stirnseiten und an den gegenüberliegenden Seitenwänden des sich trichterförmig erweiterten Bereiches aufweist.

2. Vorrichtung nach Anspruch 1, **dadurch gekennzeichnet, dass** die trichterförmige Erweiterung des Übergangsrohres sich im wesentlichen auf die horizontale Richtung beschränkt, während vorzugsweise der Durchmesser des Übergangsrohres an seiner Austrittsöffnung in vertikaler Richtung geringer ist als an seiner Entrittsöffnung oder unverändert bleibt.

3. Vorrichtung nach einem der Ansprüche 1 oder 2, **dadurch gekennzeichnet, dass** das Übergangsrohr (3) aus Platin oder einer Platinlegierung oder einem mit Platin oder Platinlegierung beschichtetem Material besteht.

4. Vorrichtung nach einem der Ansprüche 1 bis 3, **dadurch gekennzeichnet, dass** das Übergangsrohr aus einer elektrisch leitfähigen, direkt heizbaren Keramik besteht.

5. Vorrichtung nach einem der Ansprüche 1 bis 4, **dadurch gekennzeichnet, dass** das Übergangsrohr (3) eine in etwa kreisförmige Eintrittsöffnung und eine elliptische Ausgangsöffnung aufweist, wobei die große Achse des elliptischen Ausgangsquerschnittes horizontal verläuft.

6. Vorrichtung nach einem der Ansprüche 1 bis 5, **dadurch gekennzeichnet, dass** das Übergangsrohr kegelstumpfförmig mit jeweils kreisförmiger Ein- und Austrittsöffnung ausgebildet ist.

7. Vorrichtung nach einem der Ansprüche 1 bis 5, **dadurch gekennzeichnet, dass** das Übergangsrohr (3) eine kreisförmige Eintrittsöffnung und eine in etwa rechteckige Austrittsöffnung, wobei die längere Rechteckseite horizontal verläuft.

8. Vorrichtung nach einem der Ansprüche 1 bis 7, **dadurch gekennzeichnet, dass** an der Schnittstelle zwischen Übergangsrohr (3) und Übergangsrampe (2) ein Schieber (10) vorgesehen ist, welcher dem Austrittsquerschnitt des Übergangsrohres (3) vertikal von oben begrenzt.

9. Vorrichtung nach Anspruch 8, **dadurch gekennzeichnet, dass** der Schieber direkt beheizbar ist, indem er vorzugsweise eine Beschichtung aus Platin oder einer Platinlegierung aufweist.

10. Vorrichtung nach einem der Ansprüche 1 bis 9, **dadurch gekennzeichnet, dass** die Übergangsrampe (9) ein mit Ausnahme der stimseitigen Zufluss- und Abflussöffnungen allseitig geschlossener Kanal ist.

11. Vorrichtung nach einem der Ansprüche 1 bis 9, **dadurch gekennzeichnet, dass** die Übergangsrampe (9) insbesondere im Bereich unmittelbar hinter dem Schieber (10) eine beheizbare Abdeckung (16) aufweist, die mit Stromflanschen (14) verbunden ist.

12. Vorrichtung nach Anspruch 1- 11, **dadurch gekennzeichnet, dass** die Übergangsrampe (2) heizbar ist, indem sie vorzugsweise aus Platin oder einer Platinlegierung besteht bzw. mit Platin oder einer Platinlegierung beschichtet und mit Stromflansche (9) für eine direkt Heizung mittels Stromdurchfluss ausgestattet ist.

## Claims

1. Apparatus for transferring glass melt from a preparation region to a float bath (4), comprising a feed device at a level above the level of the float bath (4) and a transition ramp (2) from the level of the feed device to the level of the float bath (4), **characterised in that** the feel device is a feed pipe (1) and that provided between the feed pipe (1) and the transition ramp (2) is a transition pipe (3) which enlarges in a funnel configuration in the flow direction and is heatable directly by current passing therethrough, wherein the transition pipe (3) has current flanges (5, 6) at its ends and at the oppositely disposed side walls of the region which is enlarged in a funnel configuration.

2. Apparatus according to claim 1 **characterised in that** the funnel-shaped enlargement of the transition pipe is essentially restricted to the horizontal direction while preferably the diameter of the transition pipe at its outlet opening is smaller in a vertical direction than at its entry opening or remains unchanged.

3. Apparatus according to one of claims 1 and 2 **characterised in that** the transition pipe (3) comprises platinum or a platinum alloy or a material coated with platinum or platinum alloy.

4. Apparatus according to one of claims 1 to 3 **characterised in that** the transition pipe (3) comprises an electrically conductive, directly heatable ceramic.

5. Apparatus according to one of claims 1 to 4 **characterised in that** the transition pipe (3) has a substantially circular entry opening and an elliptical outlet opening, wherein the major axis of the elliptical outlet cross-section extends horizontally.

6. Apparatus according to one of claims 1 to 5 **characterised in that** the transition pipe is of a frustoconical configuration with respective circular entry and outlet openings.

7. Apparatus according to one of claims 1 to 5 **characterised in that** the transition pipe (3) has a circular entry opening and an approximately rectangular outlet opening, wherein the longer side of the rectangle extends horizontally.

8. Apparatus according to one of claims 1 to 7 **characterised in that** provided at the interface between the transition pipe (3) and the transition ramp (2) is a slider (10) which vertically limits the outlet cross-section of the transition pipe (3) from above.

9. Apparatus according to claim 8 **characterised in that** the slider (10) is directly heatable by virtue of the fact that it preferably has a coating of platinum or a platinum alloy.

10. Apparatus according to one of claims 1 to 9 **characterised in that** the transition ramp (2) is a passage which is closed at all sides with the exception of the end feed and discharge flow openings.

11. Apparatus according to one of claims 1 to 9 **characterised in that** in particular in the region immediately behind the slider (10) the transition ramp (2) has a heatable cover (16) which is connected to current flanges (14).

12. Apparatus according to claims 1 to 11 **characterised in that** the transition ramp (2) is heatable by virtue of the fact that it preferably comprises platinum or a platinum alloy or is coated with platinum or a platinum alloy and is provided with current flanges (9) for direct heating by means of a flow of current.

## Revendications

1. Dispositif de transfert de verre fondu d'une zone de préparation vers un bain de flottage (4), le dispositif comportant une amenée située à un niveau au-dessus du niveau du bain de flottage (4) et une rampe (2) de transfert du niveau de l'amenée au niveau du bain de flottage (4), **caractérisé en ce que** l'amenée est conformée en tube d'amenée (1) et **en ce qu'**il est prévu entre le tube d'amenée (1) et la rampe de transfert (2) un tube de transfert (3) qui s'élargit en entonnoir dans la direction d'écoulement et qui peut être chauffé directement en faisant circuler un courant à travers celui-ci, le tube de transfert (3) possédant des rebords électriquement conducteurs (5, 6) au niveau de ses côtés frontaux et au niveau des parois latérales opposées de la zone qui s'élargit en entonnoir.

2. Dispositif selon la revendication 1, **caractérisé en ce que** l'élargissement en entonnoir du tube de transfert se limite sensiblement à la direction horizontale, tandis que le diamètre du tube de transfert au niveau de ouverture de sortie de celui-ci est de préférence inférieur au diamètre au niveau de son ouverture d'entrée dans une direction verticale ou bien reste inchangé.

3. Dispositif selon l'une des revendications 1 ou 2, **caractérisé en ce que** le tube de transfert (3) est en platine ou en alliage de platine ou en un matériau doté d'un revêtement en platine ou en alliage de platine.

4. Dispositif selon l'une des revendications 1 à 3, **caractérisé en ce que** le tube de transfert (3) est en une céramique électriquement conductrice qui peut être chauffée directement.

5. Dispositif selon l'une des revendications 1 à 4, **caractérisé en ce que** le tube de transfert (3) a une ouverture d'entrée à peu près circulaire et une ouverture de sortie elliptique, le grand axe de la section de sortie elliptique s'étendant horizontalement.

6. Dispositif selon l'une des revendications 1 à 5, **caractérisé en ce que** le tube de sortie (3) a une conformation tronconique ayant des ouvertures d'entrée et de sortie circulaires.

7. Dispositif selon l'une des revendications 1 à 5, **caractérisé en ce que** le tube de transfert (3) a une ouverture d'entrée circulaire et une ouverture de sortie ayant à peu près la forme d'un rectangle dont le grand côté s'étend horizontalement.

8. Dispositif selon l'une des revendications 1 à 7, **caractérisé en ce qu'**il est prévu au niveau de l'interface entre le tube de transfert (3) et la rampe de transfert (2) un coulisseau (10) qui limite verticalement depuis le haut la section de sortie du tube de transfert (3).

9. Dispositif selon la revendication 8, **caractérisé en ce que** le coulisseau (10) peut être chauffé directement car il possède avantageusement un revêtement en platine ou en un alliage de platine.

10. Dispositif selon l'une des revendications 1 à 9, **caractérisé en ce que** la rampe de transfert (2) est un canal fermé de toutes parts à l'exception des ouvertures frontales d'admission et d'évacuation.

11. Dispositif selon l'une des revendications 1 à 9, **caractérisé en ce que** la rampe de transfert (2) possède, notamment dans la région juste en arrière du coulisseau (10), un revêtement chauffant (16) qui est relié à des rebords électriquement conducteurs (14).

12. Dispositif selon les revendications 1 à 11, **caractérisé en ce que** la rampe de transfert (2) peut être chauffée car elle est avantageusement en platine ou en alliage de platine respectivement elle est revêtue de platine ou d'un alliage de platine et est dotée de rebords électriquement conducteurs (9) pour un chauffage direct par circulation de courant.
